# EUROPEAN PATENT APPLICATION

(11) **EP 4 700 883 A2**
(43) Date of publication of application: **25.02.2026**
(21) Application number: 25187243.8
(22) Date of filing: 03.07.2025
(51) Int. Cl.: H01M 10/0525, H01M 10/0567, H01M 10/0569

(54) **ELECTROLYTE FOR LITHIUM ION BATTERY AND LITHIUM ION BATTERY**

(30) Priority: 23.08.2024 CN 202411172403
(71) Applicant: AESC Japan Ltd., Yokohama-Shi, Kanagawa 220-0012 (JP)
(72) Inventor: YU, Le, Shanghai 201315 (CN); SHI, Lei, Shanghai 201315 (CN)
(74) Representative: Becker, Eberhard

(57) **Abstract**

Provided are an electrolyte for lithium ion battery and a lithium ion battery, specifically relating to the field of electrolyte technology. The electrolyte includes an organic solvent, a lithium salt, and an additive. The organic solvent includes cyclic carbonate. A content of the cyclic carbonate in the electrolyte is 8% to 24%. The additive includes an unsaturated inorganic additive. A content of the unsaturated inorganic additive in the electrolyte is 0.3% to 0.8%. Through optimizing composition of the electrolyte solvent and introducing the unsaturated inorganic additive, high temperature performance of the battery is improved while wettability of the electrolyte is improved.

## Description

### BACKGROUND

### Technical Field

The disclosure belongs to a field of electrolyte, and in particular to an electrolyte for a lithium ion battery and a lithium ion battery.

### Description of Related Art

Electric vehicles have rapidly captured the automotive market with advantages such as low energy consumption and zero carbon emissions, gaining favor from a wide range of users. With increasing popularity, a problem of short driving range of the electric vehicles has gradually been exposed, which requires lithium ion batteries to further improve energy density to meet a requirement of increasingly higher range.

In order to improve the energy density of the battery, positive electrode materials are developing towards high-nickel ternary direction, negative electrode materials are developing towards high-silicon direction, and a structure of the battery is also gradually transitioning from pouch, prismatic to cylindrical form. The design and structure of the cylindrical batteries are different from pouch and prismatic batteries, because the electrode sheets of the cylindrical batteries are designed for winding, with layers of the electrode sheets wound together, subjected to greater winding tension, with high interlayer pressure, making it more difficult for the electrolyte to wet, which poses greater challenges for the electrolyte.

Currently, for systems of the cylindrical batteries, in order to improve wettability, a high content of dimethyl carbonate is commonly used in the electrolyte, but the stability of the dimethyl carbonate is relatively poor to cause side reactions, which often hampers the high temperature performance of the battery.

### SUMMARY

Given the drawbacks of the aforementioned existing technology, the disclosure provides an electrolyte for a lithium ion battery and a lithium ion battery, to improve a problem that the electrolyte may not simultaneously achieve high wettability and high temperature stability.

To achieve the aforementioned purpose and other related purposes, the disclosure provides an electrolyte for a lithium ion battery. The electrolyte includes an organic solvent, a lithium salt, and an additive. The organic solvent includes cyclic carbonate. A content of the cyclic carbonate in the electrolyte is 8% to 24%. The additive includes an unsaturated inorganic additive. A content of the unsaturated inorganic additive in the electrolyte is 0.3% to 0.8%.

In an example of the disclosure, the unsaturated inorganic additive includes one or more of tripropargyl phosphate, 1,3-propene sultone, and tetravinylsilane.

In an example of the disclosure, the cyclic carbonate includes fluoroethylene carbonate, and a content of the fluoroethylene carbonate in the electrolyte is 2% to 8%.

In an example of the disclosure, the cyclic carbonate further includes ethylene carbonate and/or propylene carbonate.

In an example of the disclosure, the organic solvent further includes dimethyl carbonate, and a content of the dimethyl carbonate in the electrolyte is 45% to 55%.

In an example of the disclosure, the lithium salt includes lithium hexafluorophosphate and lithium difluoro(sulfonyl)imide, and a content of the lithium difluoro(sulfonyl)imide in the electrolyte is equal or less than 2%.

Another aspect of the disclosure provides a lithium ion battery. The lithium ion battery includes a positive electrode, a negative electrode, a separator, and the electrolyte according to any one of the aforementioned electrolyte.

In an example of the disclosure, the positive electrode includes a positive electrode active material, the positive electrode active material includes a nickel-cobalt-manganese ternary positive electrode material, and a molar content of nickel in the nickel-cobalt-manganese ternary positive electrode material is equal or greater than 80%.

In an example of the disclosure, the negative electrode includes a negative electrode active material, the negative electrode active material includes graphite and a silicon compound, and a content of the silicon compound in the negative electrode active material is equal or less than 5%.

In an example of the disclosure, the lithium ion battery is a cylindrical battery with a diameter equal to or greater than 46mm, and an upper limit of a working voltage of the cylindrical battery is equal to or greater than 4.15V.

The disclosure, through optimizing the proportion of the cyclic carbonate in the electrolyte, ensures that the viscosity of the electrolyte is within an appropriate range, thereby achieving good wettability. At the same time, by introducing an appropriate amount of the unsaturated inorganic additive into the electrolyte, the additive containing unsaturated bonds has higher reaction activity and may preferentially undergo a reaction on the electrode material to form a stable solid electrolyte interphase (SEI) film and cathode-electrolyte interphase (CEI) film. Thereby, a side reaction between the electrolyte solvent and the surfaces of positive and negative electrodes are inhibited, ensuring the high temperature performance of the battery. Therefore, the electrolyte of the disclosure may simultaneously have high wettability and high temperature stability.

### DESCRIPTION OF THE EMBODIMENTS

The implementation of the disclosure is explained through specific embodiments below, and persons skilled in the art may easily understand other advantages and effects of the disclosure from the content disclosed in this specification. The disclosure may also be implemented or applied through other different specific implementations, and various modifications or changes may be made to the details in this specification based on different perspectives and applications, without departing from the spirit of the disclosure. It should be noted that, in the absence of conflict, the features in the following embodiments and embodiments may be combined with each other.

Unless otherwise defined, all technical and scientific terms used herein have the same meaning as commonly understood by those skilled in the art to which the disclosure belongs. The terms used in the specification of the disclosure are only for the purpose of describing specific embodiments and are not intended to limit the disclosure. The term "and/or" used herein includes any and all combinations of one or more of the associated listed items.

Unless otherwise stated or where contradictions exist, the terms or phrases used herein have the following meanings. The terms "multiple", "various", and "several times" mentioned herein, unless specifically limited, refer to a quantity greater than or equal to two. For example, "one or more" indicates one or greater than or equal to two.

In this document, the terms "preferred", "better", and "more preferable" are only descriptions of implementations or embodiments with better effects, and it should be understood that the terms do not constitute limitations on the scope of protection of the disclosure. If "preferred" appears in multiple places in a technical solution, unless otherwise specified, and there are no contradictions or mutually restrictive relationships, each "preferred" is independent of each other.

In this document, the terms "further", "furthermore", and "especially" are used for descriptive purposes, indicating differences in content, but should not be understood as limitations on the scope of protection of the disclosure.

In this document, regarding numerical ranges, unless otherwise specified, the distribution of optional values within the numerical range is considered continuous, and includes the two numerical endpoints of the range (that is, the minimum and maximum values), as well as each value between these two numerical endpoints. When multiple numerical ranges are provided to describe features or characteristics, these numerical ranges may be combined.

In this document, unless otherwise specified, "%" represents percentage by mass content.

Cylindrical batteries have advantages of simple design, standardized manufacturing, simple process, low cost, and strong application flexibility, and thus are favored by major manufacturers. Traditional cylindrical batteries do not have advantages when used as power batteries due to small size thereof; therefore, the size of existing cylindrical batteries is becoming increasingly larger, with the diameter of the cylindrical batteries having increased to 46mm, allowing the energy density of cells of the cylindrical batteries to climb again.

Due to a characteristic of the structure, the cylindrical batteries have higher requirements for wettability of the electrolyte. Research has found that the wettability of the electrolyte to the electrode mainly depends on the type and content of the solvent. From a mechanistic perspective, the wettability of the electrolyte is mainly affected by the viscosity and surface energy of the solvent. To obtain high wettability, the viscosity of the electrolyte needs to be as low as possible; however, highly wettable solvents often face a problem of poor high temperature stability. Based on this, the disclosure provides an electrolyte for a lithium ion battery and a lithium ion battery to improve the aforementioned problems.

The first aspect of the disclosure provides an electrolyte for a lithium ion battery. The electrolyte includes an organic solvent, a lithium salt, and an additive. The organic solvent is the main part of the electrolyte, configured to dissolve the lithium salt and the additive, and provide a medium for lithium ion transport between the positive and negative electrodes of the battery. There are many types of additives, such as a film-forming additive, a flame-retardant additive, and an overcharge protection additive, which may provide specific functions for the electrolyte according to the type of additive.

In the disclosure, the organic solvent includes cyclic carbonate. The cyclic carbonate has a relatively high relative dielectric constant and may effectively promote the dissociation of the lithium salt, being a key component in providing the ion transport capacity of the electrolyte, but the viscosity of the cyclic carbonate is relatively high. If a content of the cyclic carbonate in the electrolyte is too high, the viscosity of the electrolyte may be increased, thereby reducing the wettability of the electrolyte to the electrode. Therefore, the content of the cyclic carbonate in the electrolyte of the disclosure is 8% to 24%, further, the content of the cyclic carbonate is 10% to 20%, and furthermore, the content of the cyclic carbonate may be 12%, 15%, 18%, or 20%.

In an embodiment, the cyclic carbonate includes fluoroethylene carbonate (FEC). Due to a strong electron-withdrawing effect of a fluorine atom, the FEC has weaker solvation ability; therefore, the addition of the FEC is beneficial for fast charging of the battery. However, excessive FEC may lead to deterioration of the storage performance of the battery. If a content of the FEC is too low, a dense negative electrode interface film may not be formed. Thereby, effective protection for the negative electrode may not be provided. The content of the FEC in the electrolyte of this embodiment is 2% to 8%. As an example, the content of the FEC may be 2%, 4%, 6%, or 8%.

Further, the cyclic carbonate includes ethylene carbonate (EC) and/or propylene carbonate (PC). That is, the cyclic carbonate, besides including fluoroethylene carbonate, further includes ethylene carbonate or propylene carbonate, or propylene carbonate and ethylene carbonate. The addition amount of the EC and/or the PC needs to be combined with the FEC to meet the total content of the cyclic carbonate in the electrolyte and the content of the FEC in the electrolyte.

In an embodiment, the organic solvent further includes linear carbonate. The linear carbonate includes dimethyl carbonate (DMC). A content of the DMC in the electrolyte is not less than 45%. Further, the content of the DMC in the electrolyte is 45% to 55%. For example, the content of the DMC may be 45%, 50%, or 55%. A high content of the DMC may greatly improve the wettability and fluidity of the electrolyte. The disclosure combines the DMC with the cyclic carbonate to form the organic solvent of the electrolyte, ensuring high wettability of the electrolyte without affecting the high temperature performance of the battery.

In some other embodiments, the linear carbonate may further include ethyl methyl carbonate (EMC) and/or diethyl carbonate (DEC).

In the disclosure, the additive includes an unsaturated inorganic additive, that is, the additive with inorganic atoms as central atoms containing unsaturated bonds (referred to as the unsaturated inorganic additive). The presence of the unsaturated bonds in the unsaturated inorganic additive has higher reactivity, enabling to preferentially undergo an oxidation-reduction (redox) reaction on the electrode surface to form a stable interface film layer, thereby improving the cycling stability and service life of the battery. Moreover, the unsaturated inorganic additive may further stabilize the interface of the battery at the high temperature, reducing a side reaction on the interface, and thereby improving the high temperature cycling stability of the battery.

The inventors found in their research that the addition amount of the unsaturated inorganic additive affects the stability and fast charging capacity of the battery. As the amount of the unsaturated inorganic additive increases, impedance of a solid electrolyte interphase (SEI) film becomes larger, which causes gradual deterioration in the fast charging capacity of the battery, but the storage performance of the battery is significantly improved. When the amount of the unsaturated inorganic additive is too low, a dense protective film may not be formed on the electrode surface, which thus fails to provide effective protection for the surface of the electrode, and affects the storage performance of the battery. Therefore, the disclosure limits the amount of the unsaturated inorganic additive in the electrolyte to 0.3% to 0.8%, which may balance fast charging performance and storage performance. Optionally, the content of the unsaturated inorganic additive in the electrolyte may be 0.3%, 0.5%, or 0.8%.

In some embodiments, the unsaturated inorganic additive includes one or more of tripropargyl phosphate (TPP), 1,3-propene sultone (PST), and tetravinylsilane (TVS). That is, the unsaturated inorganic additive may be selected from any one of the types listed above, for example, the unsaturated inorganic additive is the TPP, or the PST, or the TVS. It may also be selected from any two or three of the types listed above, for example, the TPP and the PST, or the PST and the TVS, or the TPP, the PST, and the TVS. When the unsaturated inorganic additive is a combination of two or more compounds, and there is no limit on the proportion of each component within the combination, which may be mixed in any proportion.

After the lithium salt dissolves in the organic solvent, releasing a large number of active lithium ions, so that the electrolyte has good conductivity. To obtain an optimal electrolyte, the lithium salt generally needs to have the characteristics such as low dissociation energy and higher solubility. The low dissociation energy ensures that the electrolyte formed by the lithium salt after dissolution has higher conductivity, thereby achieving high rate performance of the battery. The high solubility ensures that the electrolyte has sufficient lithium ions for transport. When the battery operates at a high voltage and a high temperature, the lithium salt with better stability may not react with other components. Good SEI film-forming performance ensures that the electrolyte may not be continuously consumed during subsequent cycling processes. Good passivation function for an aluminum current collector prevents corrosion of an aluminum foil at the high voltage.

In the disclosure, the lithium salt includes lithium hexafluorophosphate (LiPF₆) and lithium difluoro(sulfonyl)imide (LiFSI). LiPF₆ with better comprehensive performance serves as the main lithium salt, and LiFSI serves as the auxiliary lithium salt. Compared with LiPF₆, LiFSI has higher conductivity and better thermal stability. Therefore, the addition of LiFSI may provide better performance of the ion transport, thereby improving the charge-discharge efficiency and stability of the battery, and improving the overall performance of the electrolyte. The concentration of the lithium salt may be set according to conventional choices in the art.

In an embodiment, a content of LiPF₆ in the electrolyte is 13% to 17%, for example, 13%, 15%, or 17%. Furthermore, a content of LiFSI in the electrolyte is less than or equal to 2%, optionally, 2%, 1%, or 0%. When the content of LiFSI in the electrolyte is 0%, it is shown that the lithium salt only has LiPF₆. Research has found that when the content of LiFSI exceeds 2%, the corrosion problem of the current collector becomes prominent, thereby affecting the reliability of the cell. Therefore, in the disclosure, the content of LiFSI does not exceed 2%.

In some embodiments, the electrolyte may further add other types of additives according to actual requirements, for example, one or more combinations of ethylene sulfate (DTD) and vinylene carbonate (VC).

The electrolyte of the disclosure may be prepared according to conventional preparation methods. As an example, in a glove box having argon with moisture content lower than 10 ppm, after the organic solvent is mixed in proportion, the thoroughly dried lithium salt and unsaturated inorganic additive are added to the aforementioned organic solvent, and mixed thoroughly to obtain an electrolyte for the lithium ion battery. The content of each component of the electrolyte is the mass percentage calculated based on the total mass of the electrolyte.

The second aspect of the disclosure provides a lithium ion battery. The lithium ion battery includes a positive electrode, a negative electrode, a separator, and the electrolyte described above. The separator is disposed between the positive electrode and the negative electrode, serving a function of isolation. During the charge-discharge process of the battery, lithium ions shuttle between the positive electrode and the negative electrode for intercalation and deintercalation, and the electrolyte serves a function of conducting ions between the positive electrode and the negative electrode. The lithium ion battery may be, for example, a primary battery or a secondary battery.

In an embodiment, the lithium ion battery is a cylindrical battery. A diameter of the cylindrical battery is greater than or equal to 46mm. A large-sized cylindrical battery has higher energy density and safety. The cylindrical battery includes a shell and a cell accommodated in the shell. The cell is formed by winding the positive electrode, the separator, and the negative electrode in sequence after stacking. Since the cell of the cylindrical battery is formed by winding the electrode sheets, the winding tension of the electrode sheets is high, the interlayer pressure is high, and the electrolyte is more difficult to impregnate. Using the electrolyte described above in the disclosure may improve the wettability problem of the cylindrical battery.

In some embodiments, the positive electrode of the cylindrical battery includes a positive electrode current collector and a positive electrode active material layer disposed on at least one side surface of the positive electrode current collector. The positive electrode current collector is a foil formed after surface treatment of nickel, titanium, aluminum, silver, stainless steel, or carbon. In addition to the foil, the positive electrode current collector may further use any one or more combinations of various forms such as film, mesh, porous, foam, or non-woven fabric. A thickness of the positive electrode current collector is, for example, 8µm to 15µm. In this embodiment, the positive electrode current collector is, for example, an aluminum foil, and a thickness of the aluminum foil is, for example, 13µm. The positive electrode active material layer includes a positive electrode active material, a positive electrode conductive agent, and a positive electrode binder, where there are no specific limitations on the positive electrode active material, the positive electrode conductive agent, and the positive electrode binder, and persons skilled in the art may choose according to actual requirements.

The positive electrode active material may choose any positive electrode active material used in lithium ion battery, that is, compounds that reversibly intercalate and deintercalate lithium ions may be used. In this embodiment, the positive electrode active material is selected from high-nickel ternary positive electrode materials, and a molar content of nickel element in the ternary positive electrode material accounts for more than 80% of the total molar amount of transition metal elements, for example LiNi_{0.8}Co_{0.1}Mn_{0.1}O₂, LiNi_{0.85}Co_{0.1}Mn_{0.05}O₂, or LiNi_{0.9}Co_{0.05}Mn_{0.05}O₂. The positive electrode active material with a high nickel content may improve the energy density of the battery. The positive electrode binder is selected from, for example, any one or more of polyvinylidene fluoride (PVDF), poly(ethylene oxide) (PEO), polyamide (PA), polyacrylonitrile (PAN), polyacrylate, polyvinylether, polymethyl methacrylate (PMMA), ethylene-propylene-diene terpolymer (EPDM), polyhexafluoropropylene (PVDF-HFP), or polymerized styrene butadiene rubber (SBR). The positive electrode conductive agent is selected from, for example, one or at least two of conductive carbon black (Super P), acetylene black, graphene, carbon nanotubes, and carbon nanofibers.

The negative electrode of the cylindrical battery includes a negative electrode current collector and a negative electrode active material layer disposed on at least one side surface of the negative electrode current collector. The negative electrode current collector is selected from, for example, one of a copper foil current collector, a composite copper foil current collector, a carbon current collector, a foam copper current collector, or a stainless steel current collector. A thickness of the negative electrode current collector is, for example, 8µm to 15µm. In this embodiment, the negative electrode current collector is selected as a copper foil. A thickness of the copper foil is, for example, 13µm. The negative electrode current collector has two surfaces opposite to each other in a thickness direction thereof. The negative electrode active material layer is disposed on any one or both of the two opposite surfaces of the negative electrode current collector. The negative electrode active material layer includes a negative electrode active material, a negative electrode conductive agent, a negative electrode binder, and a thickener, where the specific types of the negative electrode active material, the negative electrode conductive agent, and the negative electrode binder are not specifically limited, and materials known in the art that may be used in the lithium ion battery may be adopted, and persons skilled in the art may choose according to actual requirements.

As an example, the negative electrode active material is selected from compounds capable of intercalating-deintercalating lithium ions, such as a graphite-based negative electrode material and a silicon-based negative electrode material. The graphite-based negative electrode material is, for example, artificial graphite and natural graphite. The silicon-based negative electrode material is, for example, silicon oxide SiOₓ(0<x<2), and a silicon-carbon composite. In this embodiment, the negative electrode active material includes graphite and silicon compounds. The silicon compound includes silicon oxide SiOₓ(0<x<2) and/or a silicon-carbon composite. A content of the silicon compound in the negative electrode active material does not exceed 5%. Furthermore, the content of the silicon compound is 3%. The negative electrode conductive agent is selected from one of carbon black, acetylene black, graphene, carbon nanotubes, carbon nanofibers, or a combination of two or more mixed in any proportion. The negative electrode binder is selected from any one of polyacrylic acid (PAA), sodium polyacrylate (PAAS), polyacrylamide (PAM), polyvinyl alcohol (PVA), the SBR, or a combination of several mixed in any proportion. The thickener is selected from sodium carboxymethyl cellulose CMC-Na or CMC-Li.

The separator is selected from conventional types in the art, for example, a polyethylene (PE) film, a polypropylene (PP) film, a glass fiber film, or a composite film. A thickness of the separator is 9 to 18µm. An air permeability of the separator is 180s/100mL to 380s/100mL. A porosity of the separator is 30% to 50%.

The cylindrical battery may be prepared according to conventional methods in the art, exemplified as follows.

### (1) Preparation of positive electrode

The positive electrode active material, the positive electrode conductive agent, and the positive electrode binder described above are dispersed in a solvent (for example, N-methyl pyrrolidone, abbreviated as NMP) to form a uniform positive electrode slurry. The positive electrode slurry is coated on the positive electrode current collector. After processes such as drying and cold pressing, the positive electrode sheet is obtained. The proportion between components in the positive electrode slurry may be set according to conventional ratios, which is not limited thereto.

### (2) Preparation of negative electrode

The negative electrode active material, the negative electrode binder, the thickener, and the negative electrode conductive agent described above are dispersed in deionized water to form a uniform negative electrode slurry. The negative electrode slurry is coated on the negative electrode current collector. After processes such as drying and cold pressing, the negative electrode sheet is obtained. The proportion between components in the negative electrode slurry may be set according to conventional ratios, which is not limited thereto.

### (3) Battery assembly

The prepared positive electrode sheet, the separator, and the negative electrode sheet are placed in sequence, with the separator positioned between the positive and negative electrode sheets to serve as isolation, and winded to obtain a bare cell. The bare cell is placed into a cylindrical battery shell with specified size, injected with the prepared electrolyte at 1.7g/Ah, sealed, and then the electrolyte is formed to obtain a cylindrical battery (a lithium ion battery).

The disclosure uses a high-nickel content ternary material as the positive electrode active material, and combined with the electrolyte of the disclosure, so that the cylindrical battery has high wettability while fast-charging cycling performance and high-temperature stability performance are improved. Moreover, a working voltage of the lithium ion battery may reach 4.15V and above, which is suitable for a high voltage environment.

The cylindrical battery of the disclosure may be used in an electronic device to provide power support for the electronic device. The electronic device includes but is not limited to a mobile phone, a tablet, a laptop, an electric toy, an electric bicycle, a new energy vehicle, a ship, and a spacecraft. The electric toy may include stationary or mobile electric toys, for example, a game console, an electric car toy, an electric ship toy, and an electric airplane toy. The spacecraft may include an airplane, a rocket, a space shuttle, and a spaceship. The new energy vehicle may be a pure electric vehicle, a hybrid vehicle, or a range-extended vehicle.

The technical solution of the disclosure is explained in detail through several specific implementation examples and comparative examples below. Unless otherwise stated, the raw materials and reagents used in the following implementation examples are all commercially available products, or may be prepared through conventional methods in the art, and the instruments used in the implementation examples may all be commercially purchased.

### Example 1

This example provides an electrolyte for a lithium ion battery. The components and contents of the electrolyte are shown in Table 1. In Table 1, all components and contents are mass percentages calculated based on the total mass of the electrolyte.

### Preparation of electrolyte

In the glove box having argon with moisture content less than 10 ppm, battery-grade EC, PC, FEC, DMC, and EMC are first mixed in proportion to form an organic solvent, then lithium salts LiPF₆ and LiFSI, unsaturated inorganic additives TPP and PST are added to the organic solvent for mixing and stirring thoroughly to obtain an electrolyte. The content of each component in the electrolyte is shown in Table 1. It should be noted that the content of the EMC is not given in Table 1. With the total mass of the electrolyte calculated as 100%, the remaining amount in each example that is less than 100% is EMC.

This example further provides a lithium ion battery including a positive electrode, a negative electrode, a separator, and the aforementioned electrolyte. The preparation process of the lithium ion battery is as follows.

### Preparation of positive electrode

LiNi_{0.9}Co_{0.05}Mn_{0.05}O₂, PVDF, and Super P are mixed at a mass ratio of 98:1:1, NMP is added for stirring under a function of a vacuum mixer until the system becomes homogeneous and transparent to obtain a positive electrode slurry. The positive electrode slurry is evenly coated on the aluminum foil, and dried at a room temperature before transferred to an oven for drying. After processes such as cold pressing and cutting, a positive electrode sheet is obtained.

### Preparation of negative electrode

A negative electrode active material (97% artificial graphite and 3% silicon oxide SiOₓ(0<x<2)), Super P, sodium carboxymethyl cellulose (CMC-Na), and SBR are mixed at a mass ratio of 96:1:1:2, and deionized water is added for mixing and stirring thoroughly under the function of the vacuum mixer to obtain a negative electrode slurry. The negative electrode slurry is evenly coated on the copper foil of the negative electrode current collector, and dried at the room temperature before transferred to the oven for drying. After processes such as cold pressing, cutting, a negative electrode sheet is obtained.

### Separator

A 12µm PP film is used as the separator.

### Preparation of battery

The positive electrode sheet, the separator, and the negative electrode sheet are placed in sequence and winded into a roll core to obtain a bare cell. The bare cell is placed into a large cylindrical battery shell with a size of 4695, injected with the above-prepared electrolyte at 1.7g/Ah, sealed, and formation of the electrolyte is performed to obtain a cylindrical lithium ion battery.

In the disclosure, Examples 2 to 9 and Comparative Examples 1 to 8 are also provided. The content of each component in the electrolytes of Examples 2 to 9 and Comparative Examples 1 to 8 are shown in Table 1, and other steps are the same as Example 1.

**Table 1: Formulation of electrolyte of Examples 1 to 9 and Comparative Examples 1 to 8**

| Group | Components and contents of organic solvent (%) | | | | Components and contents of Lithium salt (%) | | Components and contents of unsaturated inorganic additive (%) | |
|---|---|---|---|---|---|---|---|---|
| | EC | PC | FEC | DMC | LiPF₆ | LiFSI | TPP | PST |
| Example 1 | 6 | 6 | 4 | 55 | 13 | 2 | 0.3 | 0.2 |
| Example 2 | 2 | 2 | 4 | 55 | 13 | 2 | 0.3 | 0.2 |
| Example 3 | 10 | 10 | 4 | 55 | 13 | 2 | 0.3 | 0.2 |
| Example 4 | 4 | 4 | 8 | 55 | 13 | 2 | 0.3 | 0.2 |
| Example 5 | 7 | 7 | 2 | 55 | 13 | 2 | 0.3 | 0.2 |
| Example 6 | 6 | 6 | 4 | 45 | 13 | 2 | 0.3 | 0.2 |
| Example 7 | 6 | 6 | 4 | 55 | 13 | 0 | 0.3 | 0.2 |
| Example 8 | 6 | 6 | 4 | 55 | 13 | 2 | 0.4 | 0.4 |
| Example 9 | 6 | 6 | 4 | 55 | 13 | 2 | 0.15 | 0.15 |
| Comparative Example 1 | 2 | 2 | 2 | 55 | 13 | 2 | 0.3 | 0.2 |
| Comparative Example 2 | 13 | 13 | 4 | 55 | 13 | 2 | 0.3 | 0.2 |
| Comparative Example 3 | 3 | 3 | 10 | 55 | 13 | 2 | 0.3 | 0.2 |
| Comparative Example 4 | 8 | 8 | 0 | 55 | 13 | 2 | 0.3 | 0.2 |
| Comparative Example 5 | 6 | 6 | 4 | 40 | 13 | 2 | 0.3 | 0.2 |
| Comparative Example 6 | 6 | 6 | 4 | 55 | 13 | 3 | 0.3 | 0.2 |
| Comparative Example 7 | 6 | 6 | 4 | 55 | 13 | 2 | 0.8 | 0.2 |
| Comparative Example 8 | 6 | 6 | 4 | 55 | 13 | 2 | 0.1 | 0.1 |

The lithium ion battery prepared according to Examples 1 to 9 and Comparative Examples 1 to 8 were tested for performance, and the test results are shown in Table 2. The test methods are as follows.

### (1) Viscosity test of electrolyte

A viscometer was used to test the viscosity of the electrolyte, with an environmental temperature controlled at 25°C, to measure the kinematic viscosity of the electrolyte.

### (2) Fast charging capacity test of battery

A three-electrode battery was used to measure the fast charging capacity of the battery. In the oven at a specified temperature (a room temperature of 25°C), charging was conducted at a current of 4C within the specified potential range (2.5 to 4.25V). When the negative electrode potential reached -20mV, the cell capacity was recorded and converted to SOC (State of Charge, which refers to a ratio of the remaining capacity of the battery to the capacity in a fully charged state).

### (3) High temperature storage performance test of battery

A storage test was conducted on the cell in a temperature chamber at a specified temperature (60°C). First, the initial capacity of the battery was tested at a normal temperature (25°C) with a current of 0.33C. Next, the battery was fully charged and stored in the temperature chamber at 60°C for 15 days. Afterwards the battery was removed, and the recovery capacity thereof was tested with the current of 0.33C. The battery was then fully charged and stored again. This process was repeated until 120 days, and the ratio of the recovery capacity on the 120th day to the initial capacity was collected and recorded as a storage capacity recovery rate.

**Table 2: Test results of performance of lithium ion battery of Examples 1 to 9 and Comparative Examples 1 to 8**

| Group | Viscosity (mpa·s) | -20mV corresponding to SOC | 120-day storage capacity recovery rate |
|---|---|---|---|
| Example 1 | 1.7 | 53% | 95.3% |
| Example 2 | 1.2 | 51% | 95.0% |
| Example 3 | 2.7 | 50% | 95.6% |
| Example 4 | 1.7 | 54% | 94.8% |
| Example 5 | 1.7 | 51% | 95.5% |
| Example 6 | 2.1 | 49% | 95.3% |
| Example 7 | 1.7 | 52% | 95.4% |
| Example 8 | 1.8 | 48% | 96.2% |
| Example 9 | 1.7 | 54% | 94.9% |
| Comparative Example 1 | 1.0 | 46% | 94.7% |
| Comparative Example 2 | 3.4 | 43% | 95.7% |
| Comparative Example 3 | 1.7 | 53% | 94.5% |
| Comparative Example 4 | 1.7 | 50% | 92.3% |
| Comparative Example 5 | 1.7 | 45% | 95.7% |
| Comparative Example 6 | 1.7 | 54% | 93.3% |
| Comparative Example 7 | 1.7 | 42% | 96.2% |
| Comparative Example 8 | 1.7 | 54% | 94.5% |

Referring to Table 1 and Table 2, by comparing Examples 1 to 3 and Comparative Examples 1 to 2, it may be known that: the content of the cyclic carbonate in the electrolyte affects the viscosity of the electrolyte (used to measure the wettability), the fast charging capacity of the battery, and the storage performance. As the content of the cyclic carbonate in the electrolyte decreases, the viscosity of the electrolyte decreases, and the fast charging capacity is also slightly improved. However, due to the influence of electrical conductivity, when the content of the cyclic carbonate decreases to below 8%, the fast charging capacity of the battery deteriorates instead. As the content of the cyclic carbonate in the electrolyte increases, both the viscosity and electrical conductivity of the electrolyte increase. When the content of the cyclic carbonate increases to above 24%, the viscosity of the electrolyte becomes too high, which in turn deteriorates the fast charging capacity of the battery.

By comparing Examples 1, 4, 5 and Comparative Examples 3, 4, it may be known that: when the total content of the cyclic carbonate in the electrolyte remains unchanged, the content of the FEC in the electrolyte has a significant impact on the fast charging performance and storage performance of the battery. As the content of the FEC in the electrolyte increases, the fast charging capacity of the battery is gradually improved. When the content of the FEC exceeds 8%, the fast charging capacity of the battery decreases somewhat; however, the storage performance of the battery gradually deteriorates with the increase of the content of the FEC. When the content of the FEC is too low, due to insufficient film formation on the negative electrode, effective protection may not be formed on the negative electrode, and the storage capacity of the battery significantly deteriorates. Therefore, the content of the FEC in the electrolyte should be within a reasonable range.

By comparing Examples 1, 6 and Comparative Example 5, it may be known that: the content of the DMC in the electrolyte affects the fast charging capacity of the battery. As the content of the DMC in the electrolyte increases, the fast charging capacity of the battery is improved. When the content of the DMC in the electrolyte is lower than 45%, the fast charging capacity of the battery significantly deteriorates. However, when the content of the DMC is too high, the high temperature storage performance of the battery is also affected. Therefore, the content of the DMC in the electrolyte should be higher than 45% but lower than 55%.

By comparing Examples 1, 7 and Comparative Example 6, it may be known that: adding a small amount of LiFSI to serve with LiPF₆ as lithium salts in the electrolyte may improve the fast charging performance of the battery. However, when the content of LiFSI in the electrolyte is too high, the corrosion of the current collector becomes prominent, thereby affecting the reliability of the cell.

By comparing Examples 1, 8, 9 and Comparative Examples 7, 8, it may be known that: the amount of the unsaturated inorganic additive affects the fast charging capacity and storage performance of the battery. As the amount of the unsaturated inorganic additive increases, the impedance of the SEI film becomes larger, and the fast charging capacity of the battery gradually deteriorates, but the storage performance is significantly improved. When the amount of the unsaturated inorganic additive is too low, due to the inability to form effective protection on the electrode surface, the storage performance of the battery significantly deteriorates. Therefore, the amount of the unsaturated inorganic additive is limited within a reasonable range.

The disclosure, through optimizing the proportion of the cyclic carbonate in the electrolyte, ensures that the viscosity of the electrolyte is within an appropriate range, thereby achieving good wettability. At the same time, by introducing an appropriate amount of the unsaturated inorganic additive into the electrolyte, the additive containing unsaturated bonds has higher reactivity and may preferentially undergo a chemical reaction on the surface of the electrode material to form a stable interface protective film. Thereby, the side reaction between the electrolyte solvent and the surfaces of positive and negative electrodes are inhibited, ensuring the high temperature performance of the battery. Therefore, the disclosure effectively overcomes some practical problems in the existing technology, which has high utilization value and practical significance.

## Claims

1. An electrolyte for a lithium ion battery, comprising:
an organic solvent, a lithium salt, and an additive;
wherein the organic solvent comprises cyclic carbonate, and a content of the cyclic carbonate in the electrolyte is 8% to 24%; and
the additive comprises an unsaturated inorganic additive, and a content of the unsaturated inorganic additive in the electrolyte is 0.3% to 0.8%.

2. The electrolyte according to claim 1, wherein the unsaturated inorganic additive comprises one or more of tripropargyl phosphate, 1,3-propene sultone, and tetravinylsilane.

3. The electrolyte according to claim 1, wherein the cyclic carbonate comprises fluoroethylene carbonate, and a content of the fluoroethylene carbonate in the electrolyte is 2% to 8%.

4. The electrolyte according to claim 3, wherein the cyclic carbonate further comprises ethylene carbonate and/or propylene carbonate.

5. The electrolyte according to claim 1, wherein the organic solvent further comprises dimethyl carbonate, and a content of the dimethyl carbonate in the electrolyte is 45% to 55%.

6. The electrolyte according to claim 1, wherein the lithium salt comprises lithium hexafluorophosphate and lithium difluoro(sulfonyl)imide, and a content of the lithium difluoro(sulfonyl)imide in the electrolyte is equal to or less than 2%.

7. A lithium ion battery, comprising a positive electrode, a negative electrode, a separator, and the electrolyte according to any one of claims 1 to 6.

8. The lithium ion battery according to claim 7, wherein the positive electrode comprises a positive electrode active material, the positive electrode active material comprises a nickel-cobalt-manganese ternary positive electrode material, and a molar content of the nickel in the nickel-cobalt-manganese ternary positive electrode material is equal to or greater than 80%.

9. The lithium ion battery according to claim 7, wherein the negative electrode comprises a negative electrode active material, the negative electrode active material comprises graphite and a silicon compound, and a content of the silicon compound in the negative electrode active material is equal to or less than 5%.

10. The lithium ion battery according to claim 7, wherein the lithium ion battery is a cylindrical battery with a diameter equal to or greater than 46mm, and an upper limit of a working voltage of the cylindrical battery is equal to or greater than 4.15V.
